# EUROPEAN PATENT SPECIFICATION

(11) **EP 4 653 256 B1**
(45) Date of publication and mention of the grant of the patent: **09.12.2026**
(21) Application number: 24177942.0
(22) Date of filing: 24.05.2024
(51) Int. Cl.: B60P 1/04

(54) **METHOD AND SYSTEM FOR PROVIDING A TIPPING OVER ALERT TO A TIPPING VEHICLE**
VERFAHREN UND SYSTEM ZUR BEREITSTELLUNG EINES KIPPALARMS FÜR EIN KIPPFAHRZEUG
PROCÉDÉ ET SYSTÈME POUR FOURNIR UNE ALERTE DE BASCULEMENT À UN VÉHICULE BASCULANT

(43) Date of publication of application: 26.11.2025
(73) Proprietor: VOLVO TRUCK CORPORATION, 405 08 Göteborg (SE)
(72) Inventor: QUIBRIAC, Yann, 69007 Lyon (FR); RIBERO, Raphael, 69390 Millery (FR)
(74) Representative: Zacco Sweden AB

(56) References cited:
- EP-B1- 2 787 330
- DE-A1- 102013 102 791
- US-B2- 10 821 992

## Description

### TECHNICAL FIELD

The disclosure relates generally to tipping vehicles. In particular aspects, the disclosure relates to a method and system for providing a tipping over alert to a tipping vehicle. The disclosure can be applied to heavy-duty tipping vehicles, such as trucks, buses, and construction equipment, among other tipping vehicle types. Although the disclosure may be described with respect to a particular tipping vehicle, the disclosure is not restricted to any particular tipping vehicle.

### BACKGROUND

During construction, large amounts of material needs to be handled and moved. A commonly used vehicle is a tipping vehicle on which material be loaded in one location and unloaded in another location. In many instances, the material is a granular material and or material that may stick to the sides of a bed of a tipping vehicle such as soil, mud, sand and construction aggregates. Such materials may stick to the sides of the bed, for instance in moist or wet conditions.

If the conditions are such that the granular material sticks together and/or sticks to the sides of the bed of the tipping vehicle, it can become a problem to discharge it from the tipping vehicle. As the bed of the tipping vehicle raises, material being stuck to the sides of the bed will not be discharged evenly. This may lead to situations where a lot of material can suddenly and unevenly be discharged. This can lead to dangerous situations that can lead to rollover situation. US 10 821 992 B2 discloses a computer-implemented method performed by a system for providing a tipping over alert to a tipping vehicle.

There is thus room for improvement within this field.

### SUMMARY

According to a first aspect of the disclosure, a computer-implemented method performed by a system for providing a tipping over alert to a tipping vehicle comprises:
- obtaining from the tipping vehicle, a current tipping position and a current rate of change of the tipping position,
- obtaining, from the tipping vehicle's air suspension pressure sensors, current pressure levels for each air suspension pressure sensor and a current rate of change of pressure levels for each air suspension pressure sensor,
- predicting from, the current tipping position, the current rate of change of the tipping position, the current pressure levels, the current rate of change of pressure levels and the current centre of gravity, a future centre of gravity of the tipping vehicle,
- determining a risk of the tipping vehicle tipping over based on the predicted future centre of gravity of the tipping vehicle.

The first aspect of the disclosure may seek to solve the problem of unwanted tipping over of a tipping vehicle. A technical benefit may include to reduce the risk of tipping over of a tipping vehicle by using already present sensors in the tipping vehicle. By monitoring the forces applied on different chassis areas by using the tipping vehicle's air suspension pressure sensors, it is possible to create a view of the chassis attitude to be able to anticipate a potential risk of roll over of the tipping vehicle.

Optionally in some examples, including in at least one preferred example, the method comprises:
- determining, from the current pressure levels, a current centre of gravity of the tipping vehicle,
wherein predicting, includes predicting the future centre of gravity of the tipping vehicle from the current centre of gravity of the tipping vehicle. A technical benefit may include to improve the prediction of the future centre of gravity.

Optionally in some examples, including in at least one preferred example, the method comprises:
- comparing the predicted future centre of gravity of the tipping vehicle with a nominal centre of gravity of the tipping vehicle,
wherein determining a risk of the tipping vehicle tipping over is based on the comparison of the predicted future centre of gravity and the nominal centre of gravity of the tipping vehicle. A technical benefit may include that knowing the difference of the predicted future centre of gravity and the nominal centre of gravity will lead to an increased accuracy in determining the risk.

Optionally in some examples, including in at least one preferred example, the method comprises:
- providing a tipping over alert to the tipping vehicle if a deviation of the future centre of gravity from the nominal centre of gravity is determined to cause a risk of tipping over the tipping vehicle. A technical benefit may include to provide an alert to the driver before a roll over situation occurs.

Optionally in some examples, including in at least one preferred example, the method comprises:
- providing a stop tipping command to the tipping vehicle if a deviation of the future centre of gravity from the nominal centre of gravity is determined to cause tipping over the tipping vehicle. A technical benefit may include to ultimately execute an emergency stop of the tipping.

Optionally in some examples, including in at least one preferred example, the method is performed at least partly in a simulator of the tipping vehicle. A technical benefit may include that no computation resources need to be used in the tipping vehicle itself.

Optionally in some examples, including in at least one preferred example, the method is performed at least partly in an electronic control unit of the tipping vehicle. A technical benefit may include that in case the simulator is not available, the method can still be performed in the tipping vehicle in order to not lose the possibility to receive an alert or to execute an emergency stop.

Optionally in some examples, including in at least one preferred example, the method comprises:
- obtaining, from the tipping vehicle, a current tipping vehicle position and movement data,
- predicting, from the current tipping vehicle position and movement data, a future tipping vehicle position,
- comparing the future tipping vehicle position with a topographical map of where the tipping vehicle is located,
wherein the step of predicting a future centre of gravity of the tipping vehicle includes predicting, from the future tipping vehicle position, the future centre of gravity of the tipping vehicle. A technical benefit may include that if the tipping vehicle is positioned on uneven terrain or is moving over uneven terrain while tipping, this is accounted for in the method.

Optionally in some examples, including in at least one preferred example, the method comprises:
- providing an alert to the tipping vehicle, if the current centre of gravity does not change even though the current rate of change of the tipping position is indicating an increased tipping angle. A technical benefit may include that if granular material is stuck to the sides of the bed of the tipping vehicle and does not come loose, the driver of the tipping vehicle will be alerted before the bed is raised to a position that may lead to an unsafe tipping situation.

Optionally in some examples, including in at least one preferred example, the method comprises:
- determining the nominal centre of gravity for the tipping vehicle from the tipping vehicle's factory specifications. A technical benefit may include that the nominal centre of gravity can be accurately determined from construction (i.e. computer-aided design (CAD)) drawings and other specifications available during manufacturing of the tipping vehicle.

Optionally in some examples, including in at least one preferred example, the method comprises:
- updating the nominal centre of gravity for the tipping vehicle for each modification made to the tipping vehicle relative the tipper tipping vehicle's factory specifications. A technical benefit may include that whenever a construction company or similar makes additions or changes to the tipping vehicle, for instance if they replace the current bed with another bed, it is possible to use the data for the new bed to update the nominal centre of gravity to always ensure that the nominal centre of gravity is up to date.

According to a second aspect of the disclosure, a system for providing a tipping over alert to a tipping vehicle is provided, where the system comprises a processing circuitry and a memory, the processing circuitry being configured to:
- obtain, from the tipping vehicle, a current tipping position and a current rate of change of the tipping position,
- obtain, from the tipping vehicle's air suspension pressure sensors, current pressure levels for each air suspension pressure sensor and a current rate of change of pressure levels for each air suspension pressure sensor,
- determine, from the current pressure levels, a current centre of gravity of the tipping vehicle,
- predict, from the current tipping position, the current rate of change of the tipping position, from the current rate of change of pressure levels and from the current centre of gravity, a future centre of gravity of the tipping vehicle,
- determine, a risk of the tipping vehicle (110) tipping over based on the predicted future centre of gravity of the tipping vehicle (110).
The second aspect of the disclosure may seek to seek to solve the problem of unwanted tipping over of a tipping vehicle. A technical benefit may include to reduce the risk of tipping over of a tipping vehicle by using already present sensors in the tipping vehicle. By monitoring the forces applied on different chassis areas by using the tipping vehicle's air suspension pressure sensors, it is possible to create a view of the chassis attitude to be able to anticipate a potential risk of roll over.

Optionally in some examples, including in at least one preferred example, the processing circuitry is configured to:
- determine, from the current pressure levels, a current centre of gravity of the tipping vehicle,
wherein predicting the future centre of gravity of the tipping vehicle includes predicting from the current centre of gravity of the tipping vehicle.

Optionally in some examples, including in at least one preferred example, the processing circuitry is configured to:
- compare the predicted future centre of gravity of the tipping vehicle with a nominal centre of gravity of the tipping vehicle,
wherein determining a risk of the tipping vehicle tipping over is based on the comparison of the predicted future centre of gravity and the nominal centre of gravity of the tipping vehicle.

Optionally in some examples, including in at least one preferred example, the processing circuitry is configured to:
- provide a tipping over alert to the tipping vehicle if a deviation of the future centre of gravity from the nominal centre of gravity is determined to cause a risk of tipping over the tipping vehicle. A technical benefit may include to provide an alert to the driver before a roll over situation occurs.

Optionally in some examples, including in at least one preferred example, the processing circuitry is configured to:
- provide a stop tipping command to the tipping vehicle if a deviation of the future centre of gravity from the nominal centre of gravity is determined to cause tipping over the tipping vehicle. A technical benefit may include to ultimately execute an emergency stop of the tipping.

Optionally in some examples, including in at least one preferred example, the processing circuitry is configured to at least partly:
- determine,
- predict,
- compare, and
- provide,
in a simulator of the tipping vehicle. A technical benefit may include that no computation resources need to be used in the tipping vehicle itself.

Optionally in some examples, including in at least one preferred example, the processing circuitry is configured to at least partly:
- determine,
- predict,
- compare, and
- provide,
in an electronic control unit of the tipping vehicle. A technical benefit may include that in case the simulator is not available, the method can still be performed in the tipping vehicle in order to not lose the possibility to receive an alert or to execute an emergency stop.

Optionally in some examples, including in at least one preferred example, the processing circuitry is configured to:
- obtain, from the tipping vehicle a current tipping vehicle position and movement data,
- predict, from the current vehicle position and movement data, a future tipping vehicle position,
- compare the future tipping vehicle position with a topographical map of where the tipping vehicle is located,
wherein the processing circuitry is configured to predict a future centre of gravity of the tipping vehicle by including predicting, from the future tipping vehicle position, the future centre of gravity of the tipping vehicle. A technical benefit may include that if the tipping vehicle is positioned on uneven terrain or is moving over uneven terrain while tipping, this is accounted for in the system.

Optionally in some examples, including in at least one preferred example, the processing circuitry is configured to:
- provide an alert to the tipping vehicle, if the current centre of gravity does not change even though the current rate of change of the tipping position is indicating an increased tipping angle. A technical benefit may include that if granular material is stuck to the sides of the bed of the tipping vehicle and does not come loose, the driver of the tipping vehicle will be alerted before the bed is raised to a position that may lead to an unsafe tipping situation.

Optionally in some examples, including in at least one preferred example, the processing circuitry is configured to:
- determine the nominal centre of gravity for the tipping vehicle from the tipping vehicle's factory specifications. A technical benefit may include that the nominal centre of gravity can be accurately determined from construction (i.e. computer-aided design (CAD)) drawings and other specifications available during manufacturing of the tipping vehicle.

Optionally in some examples, including in at least one preferred example, the processing circuitry is configured to:
- update the nominal centre of gravity for the tipping vehicle for each modification made to the tipping vehicle relative the tipper tipping vehicle's factory specifications. A technical benefit may include that whenever a construction company or similar makes additions or changes to the tipping vehicle, for instance if they replace the current bed with another bed, it is possible to use the data for the new bed to update the nominal centre of gravity to always ensure that the nominal centre of gravity is up to date.

Optionally in some examples, including in at least one preferred example, the tipping vehicle is a dump truck, haul truck or tipper truck.

According to a third aspect of the disclosure, a computer program product comprises program code for performing, when executed by the processing circuitry, the method of the first aspect.

According to a fourth aspect of the disclosure, a non-transitory computer-readable storage medium comprises instructions, which when executed by the processing circuitry, cause the processing circuitry to perform the method of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1a** and **1b** are exemplary overviews of a communications network in which a system according to some embodiments may be implemented.
**FIG. 2** is an exemplary overview of the air suspension pressure sensors of a tipping vehicle.
**FIG. 3** is an exemplary overview of a tipping truck indicating a nominal centre of gravity and a current centre of gravity of the tipping vehicle.
**FIG. 4** is an exemplary overview of a tipping vehicle attitude safe zone in which the current centre of gravity is located.
**FIG. 5** is an exemplary overview of the tipping vehicle attitude safe zone being positioned inside a tipping vehicle attitude alert zone in which the current centre of gravity is located.
**FIG. 6** is an exemplary overview of an imminent tipping over situation for the tipping vehicle where the current centre of gravity is located outside of the tipping vehicle attitude alert zone.
**FIG. 7** is a flowchart depicting embodiments of a method for providing a tipping over alert to a tipping vehicle according to some embodiments.
**FIG. 8** is a schematic block diagram depicting embodiments of a system.
**FIG. 9** is a schematic diagram of an exemplary computer system for implementing embodiments disclosed herein according to some embodiments.

### DETAILED DESCRIPTION

The detailed description set forth below provides information and examples of the disclosed technology with sufficient detail to enable those skilled in the art to practice the disclosure.

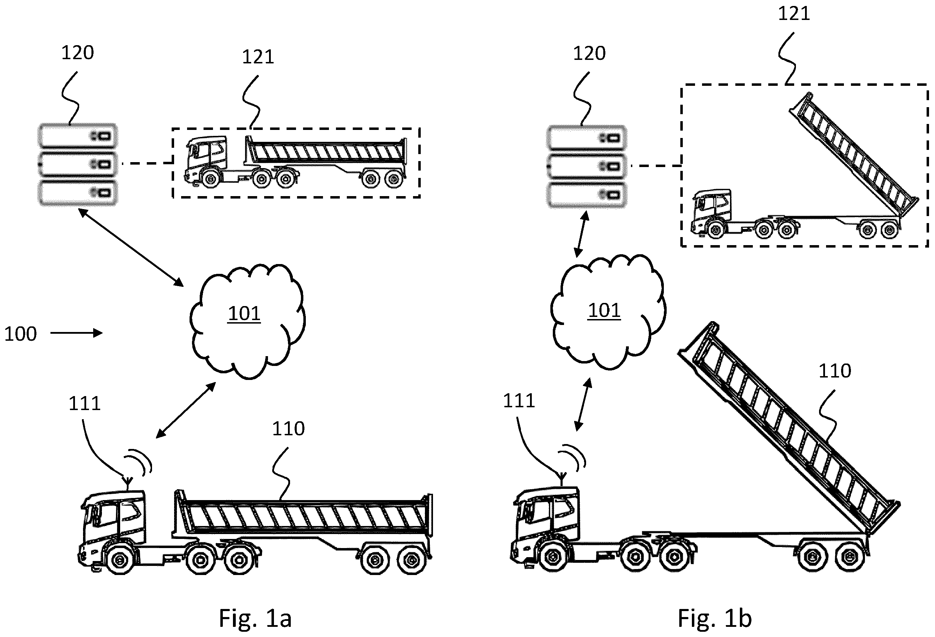

**FIG. 1a** and **1b** illustrates a communication system in which a system for providing a tipping over alert to a tipping vehicle according to some embodiments may be implemented. **FIG. 1a** illustrates an initial state of the system before tipping is started. **FIG. 1b** illustrates a tipping state of the system where the tipping vehicle has raised its bed for tipping of material in the bed.

The communication system 100 shown in Fig. 1a and 1b may comprise a wireless communications network 101 arranged to enable the tipping vehicle 110 to wirelessly communicate with the system 120 for providing a tipping over alert to the tipping vehicle 110 according to some embodiments, and vice versa. Communication is for instance made through a data communications transceiver arrangement connected to an antenna 111. Here, the tipping vehicle 110 and the system 120 may comprise wireless communications enabled devices that allows the tipping vehicle 110 and the system 120 to wirelessly communicate with each other via the wireless communications network 101, for instance, via one or more access points and/or radio base stations (not shown) of the wireless communications network 101. The system 120 may comprise a simulator 121.

The simulator 121 may be a vehicle simulation system arranged to create a simulation for a tipping vehicle 110, e.g. a so-called digital model or digital twin model for the tipping vehicle 110, at least partly based on the tipping vehicle's factory specifications. The simulation may, for example, be a statistical and/or Artificial Intelligence/Machine Learning, AI/ML, driven virtual model or replica of the same type of vehicle that the tipping vehicle is. Here, it should also be noted that a digital twin may be a digital representation of a physical or real object or process.

The system 120 and/or the simulator 121 may be implemented by one or more centrally located and/or distributed network units, such as, e.g. online data processing server(s). Optionally, the system 120 and/or the simulator 121 may also form part of a cloud service in the wireless communications network 101, e.g. the Internet. It should also be noted that the simulator 121 may form part of the system 120, but may also not form part of the system 120 but be co-located with the system 120. Hence, the processing described herein as performed by the system 120 may be partly implemented in the simulator 121, in a cloud service and/or in an electronic control unit (ECU) of the tipping vehicle 110.

The tipping vehicle 110 in FIG. 1a and FIG. 1b are semi-trailer end dump trucks and are shown as an example.

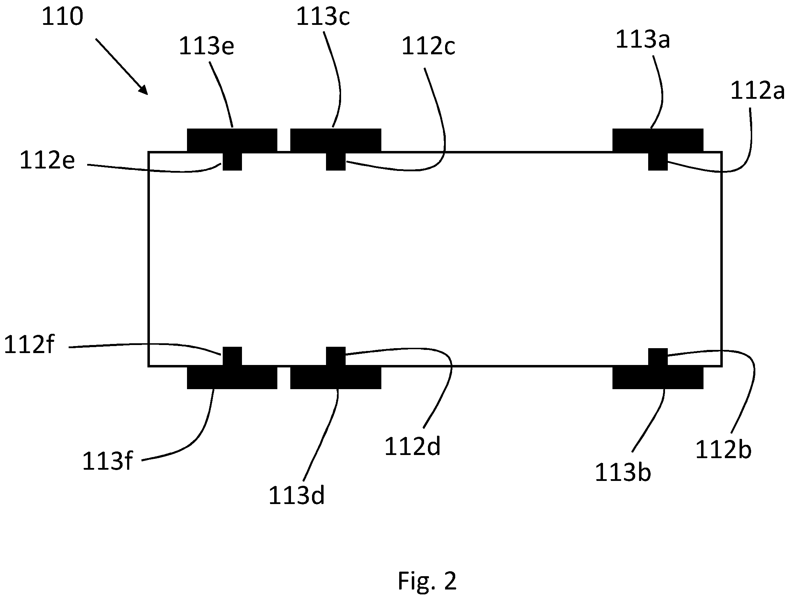

**FIG. 2** is an exemplary overview of air suspension pressure sensors of a tipping vehicle equipped with a standard pneumatic suspension system. In the example of **FIG. 2** the tipping vehicle 110 comprises a truck chassis with a dump body or bed mounted to a frame of the tipping vehicle 110 as another example of a tipping vehicle 110 than the one in FIGS.1a and 1b.

As shown in FIG. 2, the tipping vehicle 110 comprises one air suspension pressure sensor 112a-112f per wheel 113a-113f. One advantage with the system is that it uses the already existing air suspension pressure sensors 112a-112f installed on the tipping vehicle 110. From the tipping vehicle's air suspension pressure sensors 112a-112f, current pressure levels for each air suspension pressure sensor 112a-112f and a current rate of change of pressure levels for each air suspension pressure sensor 112a-112f can be obtained.

Additionally, the tipping vehicle 110 comprises sensors that measure a current tipping position and a current rate of change of the tipping position.

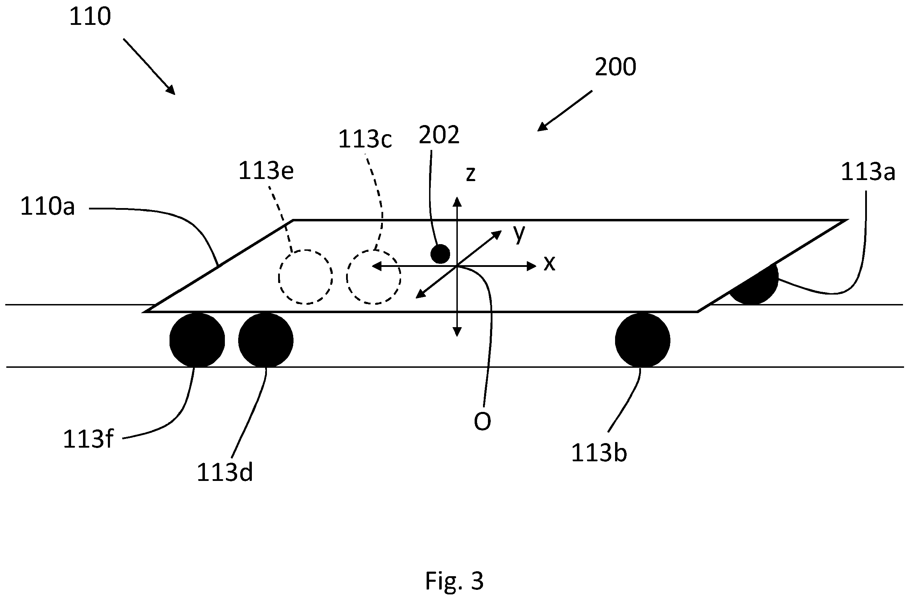

**FIG. 3** is an exemplary overview of a model of a tipping vehicle 110 indicating a nominal centre of gravity and a current centre of gravity of the tipping vehicle. The tipping vehicle 110 is represented by its six wheels 113a-113f positioned on a platform 110a representing the extent of the tipping vehicle 110. In the platform, a coordinate system 200 with a longitudinally extending x-axis, a transversally extending y-axis and a vertically extending z-axis is placed with its origin O representing a nominal centre of gravity of the tipping vehicle 110. The nominal centre of gravity is the centre of gravity of the tipping vehicle 110 under nominal conditions, e.g. with the tipping vehicle 110 unloaded, with its tipping bed lowered and positioned on a completely horizontally even road. In some embodiments, the nominal centre of gravity for the tipping vehicle 110 is determined from the tipping vehicle's factory specifications. In other embodiments, the nominal centre of gravity for the tipping vehicle 110 is determined from placing the tipping vehicle 110 on a reference surface known to be horizontal.

A filled circle represents the current centre of gravity 202, i.e. the actual centre of gravity of the tipping vehicle during current conditions. The current conditions are for instance current load in the tipping bed, current incline on the surface the tipping vehicle 110 is positioned on and current tipping position of the tipping bed. The current tipping position is the current position or current angle of the tipping bed. In **FIG. 3****,** the current centre of gravity 202 is outside of the nominal centre of gravity indicating that the tipping vehicle 110 is exposed to one or more forces, e.g. from having a load in the tipping bed and/or having the tipping bed raised to some extent, that have moved the current centre of gravity 202 from the nominal centre of gravity.

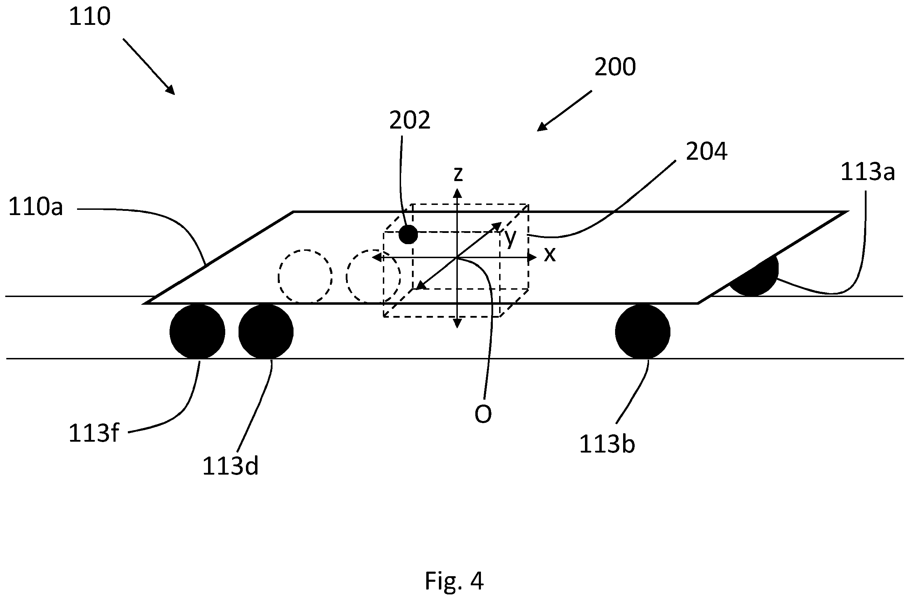

**FIG. 4** is an exemplary overview of a tipping vehicle attitude safe zone 204 in which the current centre of gravity 202 is located. In order to determine if the current centre of gravity 202 represents a danger of tipping over, a tipping vehicle attitude safe zone 204 is implemented in the system. The size of the tipping vehicle attitude safe zone 204 and the position of the origin O of the coordinate system within the tipping vehicle attitude safe zone 204 representing the nominal centre of gravity is individually calculated for each tipping vehicle 110 depending on its design and if any changes have been made to it since manufacturing. In **FIG. 4****,** the tipping vehicle attitude safe zone 204 is represented by a box with dashed lines.

From comparing the current pressure levels of all air suspension pressure sensors 112a-112f, the current centre of gravity 202 of the tipping vehicle 110 can be determined. As seen from the figure, the current centre of gravity 202 is located within the tipping vehicle attitude safe zone 204. This indicates to the system that there is currently no risk of the tipping vehicle 110 tipping over.

A future centre of gravity of the tipping vehicle can be predicted from the current tipping position, the current rate of change of the tipping position, the current rate of change of pressure levels and the current centre of gravity 202. By comparing the predicted future centre of gravity of the tipping vehicle with a nominal centre of gravity of the tipping vehicle 110, it can be determined if there is a risk of tipping over the tipping vehicle 110. If this is determined, a tipping over alert to the tipping vehicle 110 can be provided.

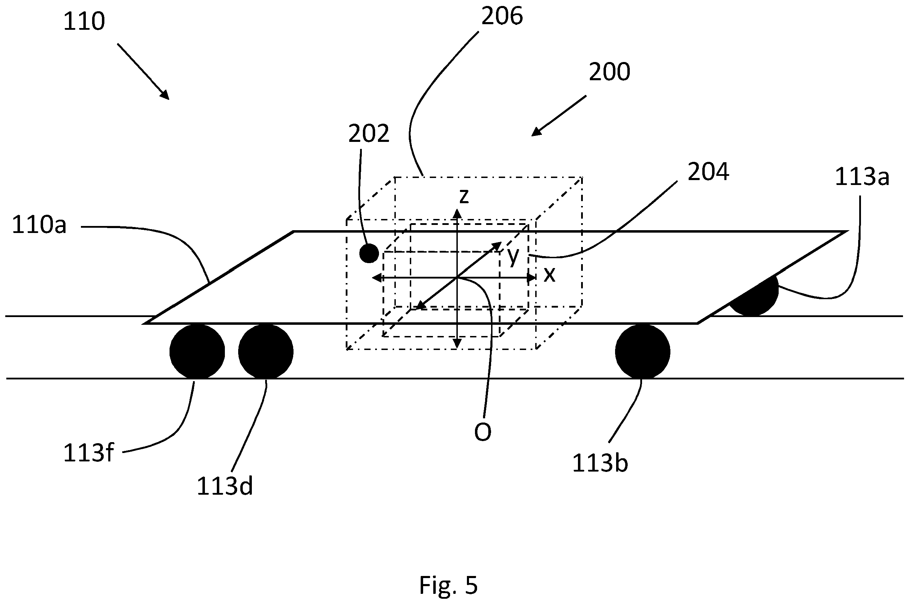

**FIG. 5** is an exemplary overview of the tipping vehicle attitude safe zone 204 being positioned inside a tipping vehicle attitude alert zone 206 in which the current centre of gravity 202 is located. In **FIG. 5****,** a tipping vehicle attitude alert zone 206 is implemented outside of the tipping vehicle attitude safe zone 204. As with the tipping vehicle attitude safe zone 204, the tipping vehicle attitude alert zone 206 is calculated for each individual tipping vehicle 110 depending on its design and if any changes have been made to it since manufacturing.

In **FIG. 5****,** an alert situation is shown where the current centre of gravity 202 has moved from inside the tipping vehicle attitude safe zone 204 to outside the tipping vehicle attitude safe zone 204 and into the tipping vehicle attitude alert zone 206. In the alert situation, the system is arranged to provide a tipping over alert to the driver of the tipping vehicle 110. The alert situation also applies if the current centre of gravity 202 is predicted to move from inside the tipping vehicle attitude safe zone 204 to outside the tipping vehicle attitude safe zone 204 and into the tipping vehicle attitude alert zone 206.

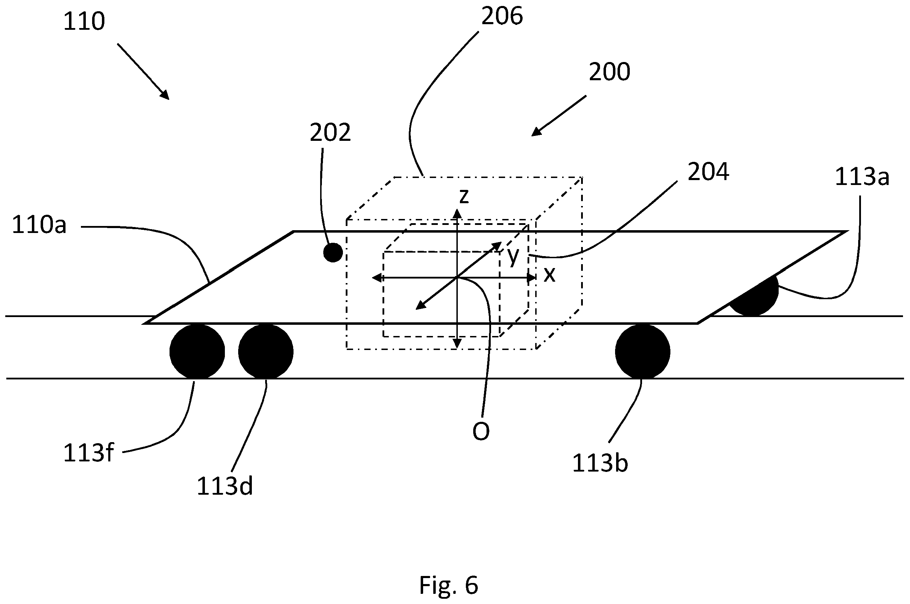

**FIG. 6** is an exemplary overview of an imminent tipping over situation for the tipping vehicle 110 where the current centre of gravity 202 is located outside of the tipping vehicle attitude alert zone 206. In **FIG. 6****,** a stop situation is shown where the current centre of gravity 202 has moved from inside the tipping vehicle attitude alert zone 206 to outside the tipping vehicle attitude alert zone 206. If the current centre of gravity 202 is outside of the tipping vehicle attitude alert zone 206, tipping over of the tipping vehicle 110 is imminent. In the stop situation, the system is arranged to provide a stop tipping command to the tipping vehicle 110. The stop situation also applies if the current centre of gravity 202 is predicted to move from inside the tipping vehicle attitude alert zone 206 to outside the tipping vehicle attitude alert zone 206. In this situation, a stop tipping command is issued to the tipping vehicle 110, overriding the driver's input in order to stop a tipping over of the tipping vehicle 110.

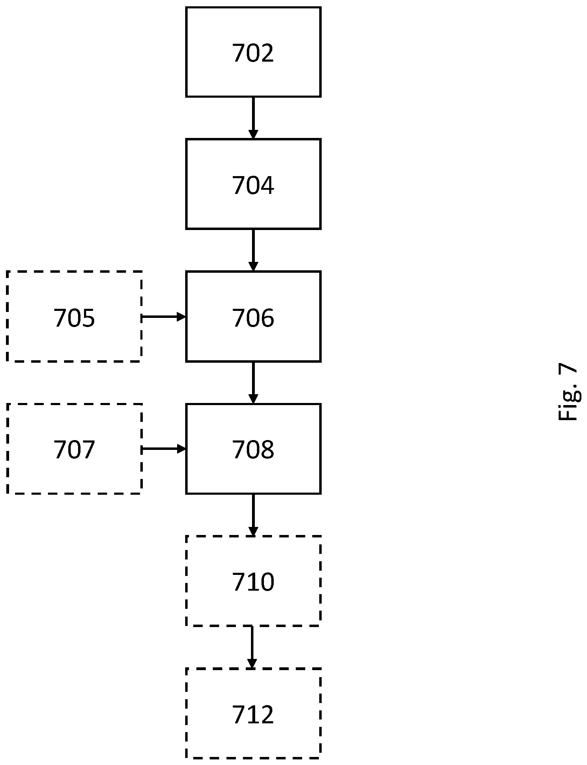

Embodiments of a computer-implemented method 700 performed by a system for providing a tipping over alert to a tipping vehicle 110, will now be described with reference to the flowchart depicted in **FIG. 7. FIG. 7** is an illustrated example of actions, steps or operations which may be performed by the system described above with reference to **FIG. 1****.** The method 700 may comprise the following actions, steps or operations.

**Action 702.** The system obtains from the tipping vehicle, a current tipping position and a current rate of change of the tipping position. The current tipping position is the tipping position of the bed of the tipping vehicle as measured as a distance from a completely lowered bed, or as an angle of the bed relative to a horizontal axis. Also, the current rate of change of the tipping position is measured as a change in distance per unit of time, e.g. centimetres per second or as a change in angle per unit of time, e.g. degrees per second.

**Action 704.** The system obtains from the tipping vehicle's air suspension pressure sensors, current pressure levels for each air suspension pressure sensor and a current rate of change of pressure levels for each air suspension pressure sensor.

**Action 706.** The system predicts from, the current tipping position, the current rate of change of the tipping position, the current pressure levels and the current rate of change of pressure levels, a future centre of gravity of the tipping vehicle. Knowing the current tipping position, the current rate of change of the tipping position, the current pressure levels and the current rate of change of pressure levels, and by combining all data, it is possible to predict a future centre of gravity for at least the next few seconds with a high degree of certainty.

**Action 708.** The system determines a risk of the tipping vehicle tipping over based on the predicted future centre of gravity of the tipping vehicle. Knowing the predicted future centre of gravity, the system can be based on its knowledge of the tipping vehicle, determine a risk of the tipping vehicle tipping over.

In addition to the above actions, the system may optionally according to an example determine as **Action 705,** from the current pressure levels, a current centre of gravity of the tipping vehicle. With the addition of **Action 705,** the predicting of **Action 706,** includes predicting the future centre of gravity of the tipping vehicle from the current centre of gravity of the tipping vehicle. This leads to a further increase in accuracy of the prediction of the future centre of gravity.

In addition to the above actions, the system may optionally according to an example compare as **Action 707,** the predicted future centre of gravity of the tipping vehicle with a nominal centre of gravity of the tipping vehicle. With the addition of **Action 707,** the determining of **Action 708** of a risk of the tipping vehicle tipping over is based on the comparison of the predicted future centre of gravity and the nominal centre of gravity of the tipping vehicle. As can be seen in **FIGS. 3-6****,** the system is provided with the nominal centre of gravity of the tipping vehicle as well as a tipping vehicle attitude safe zone and a tipping vehicle attitude alert zone. By comparing the position of the predicted future centre of gravity of the tipping vehicle with the position of the nominal centre of gravity of the tipping vehicle, it is possible to determine where the future centre of gravity will end up.

In addition to the above actions, the system may optionally according to an example provide as **Action 710,** a tipping over alert to the tipping vehicle if the future centre of gravity is determined to cause a risk of tipping over the tipping vehicle. If the predicted position of the future centre of gravity is predicted to be at a distance from the position of the nominal centre of gravity of the tipping vehicle such that the position of the future centre of gravity is outside of the tipping vehicle attitude safe zone, a tipping over alert is provided to the tipping vehicle.

In addition to the above actions, the system may optionally according to an example provide as **Action 712** a stop tipping command to the tipping vehicle if the future centre of gravity is determined to cause tipping over the tipping vehicle. If the predicted position of the future centre of gravity is predicted to be at a distance from the position of the nominal centre of gravity of the tipping vehicle such that the position of the future centre of gravity is outside of the tipping vehicle attitude alert zone, a stop tipping command is issued to the tipping vehicle, overriding the driver's input in order to stop a tipping over of the tipping vehicle.

The system may optionally according to an example obtain, from the tipping vehicle, a current tipping vehicle position and movement data, predict, from the current tipping vehicle position and movement data, a future tipping vehicle position and compare the future tipping vehicle position with a topographical map of where the tipping vehicle is located. The step of predicting a future centre of gravity of the tipping vehicle includes predicting, based on the future tipping vehicle position, the future centre of gravity of the tipping vehicle. In this way, the method considers the orientation of the surface the tipping vehicle is currently situated on and the orientation of the surface it is predicted to travel to when considering if there is a risk of tipping over.

The system may optionally according to an example, provide an alert to the tipping vehicle, if the current centre of gravity does not change even though the current rate of change of the tipping position is indicating an increased tipping angle. In this way, the method considers the risk of sudden shifts of material that has stuck to the sides of the bed of the tipping vehicle.

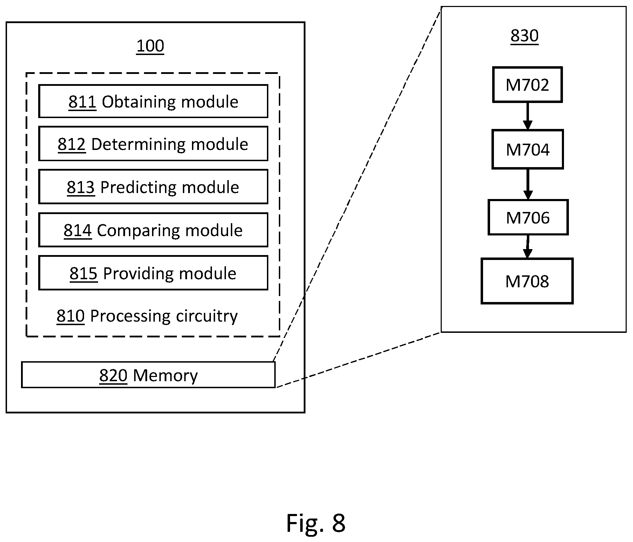

**Fig. 8** shows a schematic block diagram of embodiments of the system 1. an exemplary overview of the system **100** for providing a tipping over alert to a tipping vehicle. The embodiments of the system 100 described herein may be considered as independent examples, or may be considered in any combination with each other to describe non-limiting examples. It should also be noted that, although not shown in FIG. 8, it should be noted that known conventional features of a system 100, such as, for example, a connection to the mains, network connections (e.g. input/output ports, etc.), etc., may be assumed to be comprised in the system 100 but is not shown or described any further in regards to FIG. 8. The system 100 may comprise one or more centrally located or distributed network unit(s), wherein the system 100 and the one or more network unit(s) may comprise processing circuitry 810 and a memory 820.

It should also be noted that some or all of the functionality described in the examples above as being performed by the system 100 may be provided by the processing circuitry 810 executing instructions stored on a computer-readable medium, such as, the memory 820 shown in FIG. 8. The processing circuitry 810 may also comprise an obtaining module 811, a determining module 812, a predicting module 813, a comparing module 814 and a providing module 815, each responsible for providing its functionality to support the examples described herein.

The memory 820 comprises computer code, that when loaded from memory **820** and executed by the one or more processors or processing circuitry **810,** causes the system **100** to wirelessly connect perform the actions, steps or operations of the methods described above.

The system 100 or processing circuitry 810 is configured to, or may comprise the obtaining module 811 configured to, obtain, from the tipping vehicle 110, a current tipping position and a current rate of change of the tipping position.

Also, the system 100 or processing circuitry 810 is also configured to, or may comprise the obtaining module 811 configured to, obtain, from the tipping vehicle's air suspension pressure sensors, current pressure levels for each air suspension pressure sensor and a current rate of change of pressure levels for each air suspension pressure sensor.

Further, the system 100 or processing circuitry 810 is configured to, or may comprise the determining module 812 configured to, determine from the current pressure levels, a current centre of gravity of the tipping vehicle.

Furthermore, the system 100 or processing circuitry 810 is configured to, or may comprise the predicting module 813 configured to predict from, the current tipping position, the current rate of change of the tipping position, the current rate of change of pressure levels and the current centre of gravity, a future centre of gravity of the tipping vehicle.

Additionally, the system 100 or processing circuitry 810 is configured to, or may comprise a comparing module 814 configured to compare the predicted future centre of gravity of the tipping vehicle with a nominal centre of gravity of the tipping vehicle.

Further, the system 100 or processing circuitry 810 is configured to, or may comprise a providing module 815 configured to provide a tipping over alert to the tipping vehicle if the future centre of gravity is determined to cause a risk of tipping over the tipping vehicle.

In some embodiments, the system 100 or the processing circuitry 810 may be configured to, or may comprise the providing module 815 configured to, provide a stop tipping command to the tipping vehicle if the future centre of gravity is determined to cause tipping over the tipping vehicle.

In some embodiments, the system 100 or the processing circuitry 810 may be configured to, or may comprise the obtaining module 811 configured to obtain, from the tipping vehicle, a current tipping vehicle position and movement data. In this case, the system 100 or processing circuitry 810 may also be configured to, or may comprise the predicting module configured to predict, from the current tipping vehicle position and movement data, a future tipping vehicle position. Furthermore, the system 100 or processing circuitry 810 may here also be configured to, or may comprise the comparing module 814 configured to compare the future tipping vehicle position with a topographical map of where the tipping vehicle is located. In this case, predicting a future centre of gravity of the tipping vehicle may include predicting, based on the future tipping vehicle position, the future centre of gravity of the tipping vehicle.

In some embodiments, the system 100 or the processing circuitry 810 may be configured to, or may comprise the providing module 815 configured to provide an alert to the tipping vehicle, if the current centre of gravity does not change even though the current rate of change of the tipping position is indicating an increased tipping angle.

Furthermore, the embodiments for providing a tipping over alert to a tipping vehicle described above may be implemented through one or more processors, such as the processing circuitry 810 in the system 100 depicted in FIG. 8 together with computer program code for performing the functions and actions of the examples herein. The program code mentioned above may also be provided as a computer program product, for instance in the form of a data carrier carrying computer program code or code means for performing the examples herein when being loaded into the processing circuitry 810 in the system 100. The computer program code may e.g. be provided as pure program code in the network system 100 or on a server and downloaded to the system 100. Thus, it should be noted that the modules of the system 100 may in some examples be implemented as computer programs stored in memory, e.g. in the memory modules 820 in FIG. 8, for execution by processors or processing modules, e.g. the processing circuitry 810 of FIG. 3. Those skilled in the art will also appreciate that the processing circuitry 810 and the memory 820 described above may refer to a combination of analogue and digital circuits, and/or one or more processors configured with software and/or firmware, e.g. stored in a memory, that when executed by the one or more processors such as the processing circuitry 810 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

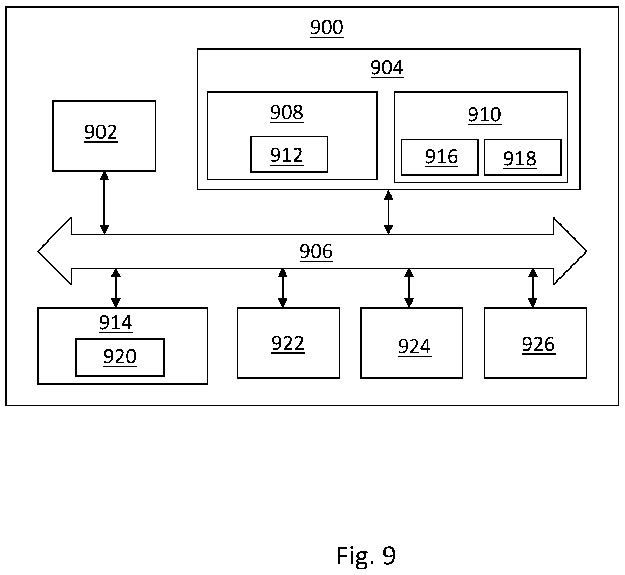

**FIG. 9** is a schematic diagram of a computer system **900** for implementing examples disclosed herein. The computer system **900** is adapted to execute instructions from a computer-readable medium to perform these and/or any of the functions or processing described herein. The computer system **900** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include processing circuitry **902** (e.g., processing circuitry including one or more processor devices or control units), a memory **904,** and a system bus **906.** The computer system **900** may include at least one computing device having the processing circuitry **902.** The system bus **906** provides an interface for system components including, but not limited to, the memory **904** and the processing circuitry **902.** The processing circuitry **902** may include any number of hardware components for conducting data or signal processing or for executing computer code stored in memory **904.** The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914,** which includes complex programming instructions (e.g., complex computer-readable program code) to cause the processing circuitry **902** to carry out actions described herein. Thus, the computer-readable program code of the computer program **920** can comprise software instructions for implementing the functionality of the examples described herein when executed by the processing circuitry **902.** In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902.** The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer-implemented method performed by a system for providing a tipping over alert to a tipping vehicle, the method comprising:
- obtaining from the tipping vehicle, a current tipping position and a current rate of change of the tipping position,
- obtaining, from the tipping vehicle's air suspension pressure sensors, current pressure levels for each air suspension pressure sensor and a current rate of change of pressure levels for each air suspension pressure sensor,
- predicting from the current tipping position, the current rate of change of the tipping position, the current pressure levels and the current rate of change of pressure levels, a future centre of gravity of the tipping vehicle,
- determining a risk of the tipping vehicle tipping over based on the predicted future centre of gravity of the tipping vehicle.

Example 2: The computer-implemented method according to example 1, wherein the method comprises:
- determining, from the current pressure levels, a current centre of gravity of the tipping vehicle,
wherein predicting, includes predicting the future centre of gravity of the tipping vehicle from the current centre of gravity of the tipping vehicle.

Example 3: The computer-implemented method according to example 1 or 2, wherein the method comprises:
- comparing the predicted future centre of gravity of the tipping vehicle with a nominal centre of gravity of the tipping vehicle,
wherein determining a risk of the tipping vehicle tipping over is based on the comparison of the predicted future centre of gravity and the nominal centre of gravity of the tipping vehicle.

Example 4: The computer-implemented method according to example 3, wherein the method comprises:
- providing a tipping over alert to the tipping vehicle if a deviation of the future centre of gravity from the nominal centre of gravity is determined to cause a risk of tipping over the tipping vehicle.

Example 5: The computer-implemented method according to example 3 or 4, wherein the method comprises:
- providing a stop tipping command to the tipping vehicle if a deviation of the future centre of gravity from the nominal centre of gravity is determined to cause tipping over the tipping vehicle.

Example 6: The computer-implemented method according to any one of the preceding examples, wherein the method is performed at least partly in a simulator of the tipping vehicle.

Example 7: The computer-implemented method according to any one of the preceding examples, wherein the method is performed at least partly in an electronic control unit of the tipping vehicle.

Example 8: The computer-implemented method according to any one of the preceding examples, wherein the method comprises:
- obtaining, from the tipping vehicle, a current tipping vehicle position and movement data,
- predicting, from the current tipping vehicle position and movement data, a future tipping vehicle position,
- comparing the future tipping vehicle position with a topographical map of where the tipping vehicle is located,
wherein the step of predicting a future centre of gravity of the tipping vehicle includes predicting, based on the future tipping vehicle position, the future centre of gravity of the tipping vehicle.

Example 9: The computer-implemented method according to any one of the preceding examples 2-8, wherein the method comprises:
- providing an alert to the tipping vehicle, if the current centre of gravity does not change even though the current rate of change of the tipping position is indicating an increased tipping angle.

Example 10: The computer-implemented method according to any one of the preceding examples 3-9, wherein the method comprises:
- determining the nominal centre of gravity for the tipping vehicle from the tipping vehicle's factory specifications.

Example 11: The computer-implemented method according to example 10, wherein the method comprises:
- updating the nominal centre of gravity for the tipping vehicle for each modification made to the tipping vehicle relative the tipper tipping vehicle's factory specifications.

Example 12: A system for providing a tipping over alert to a tipping vehicle, the system comprising a processing circuitry and a memory, the processing circuitry being configured to:
- obtain, from the tipping vehicle, a current tipping position and a current rate of change of the tipping position,
- obtain, from the tipping vehicle's air suspension pressure sensors, current pressure levels for each air suspension pressure sensor and a current rate of change of pressure levels for each air suspension pressure sensor,
- predict, from the current tipping position, the current rate of change of the tipping position, the current pressure levels and from the current rate of change of pressure levels, a future centre of gravity of the tipping vehicle,
- determine, a risk of the tipping vehicle tipping over based on the predicted future centre of gravity of the tipping vehicle.

Example 13: The system according to example 12, wherein the processing circuitry is configured to:
- determine, from the current pressure levels, a current centre of gravity of the tipping vehicle,
wherein predicting the future centre of gravity of the tipping vehicle includes predicting from the current centre of gravity of the tipping vehicle.

Example 14: The system according to example 12 or 13, wherein the processing circuitry is configured to:
- compare the predicted future centre of gravity of the tipping vehicle with a nominal centre of gravity of the tipping vehicle,
wherein determining a risk of the tipping vehicle tipping over is based on the comparison of the predicted future centre of gravity and the nominal centre of gravity of the tipping vehicle.

Example 15: The system according to example 14, wherein the processing circuitry is configured to:
- provide a tipping over alert to the tipping vehicle if a deviation of the future centre of gravity from the nominal centre of gravity is determined to cause a risk of tipping over the tipping vehicle.

Example 16: The system according to examples 14 or 15, wherein the processing circuitry is configured to:
- provide a stop tipping command to the tipping vehicle if a deviation of the future centre of gravity from the nominal centre of gravity is determined to cause tipping over the tipping vehicle.

Example 17: The system according to any one of examples 12-16, wherein the processing circuitry is configured to at least partly:
- determine,
- predict,
- compare, and
- provide,
in a simulator of the tipping vehicle

Example 18: The system according to any one of examples 12-17, wherein the processing circuitry is configured to at least partly:
- determine,
- predict,
- compare, and
- provide,
in an electronic control unit of the tipping vehicle.

Example 19: The system according to any one of examples 12-18, wherein the processing circuitry is configured to:
- obtain, from the tipping vehicle a current tipping vehicle position and movement data,
- predict, from the current tipping vehicle position and movement data, a future tipping vehicle position,
- compare the future tipping vehicle position with a topographical map of where the tipping vehicle is located,
wherein the processing circuitry is configured to predict a future centre of gravity of the tipping vehicle by including predicting, based on the future tipping vehicle position, the future centre of gravity of the tipping vehicle.

Example 20: The system according to any one of the preceding examples 12-19, wherein the processing circuitry is configured to:
- provide an alert to the tipping vehicle, if the current centre of gravity does not change even though the current rate of change of the tipping position is indicating an increased tipping angle.

Example 21: The system according to any one of the preceding examples 12-20, wherein the processing circuitry is configured to:
- determine the nominal centre of gravity for the tipping vehicle from the tipping vehicle's factory specifications.

Example 22: The system according to example 21, wherein the processing circuitry is configured to:
- update the nominal centre of gravity for the tipping vehicle for each modification made to the tipping vehicle relative the tipper tipping vehicle's factory specifications.

Example 23: System according to any one of the preceding examples 12-22, wherein the tipping vehicle is a dump truck, haul truck or tipper truck.

Example 24: A computer program product comprising program code for performing, when executed by the processing circuitry, the method of any of examples 1-11.

Example 25: A non-transitory computer-readable storage medium comprising instructions, which when executed by the processing circuitry, cause the processing circuitry to perform the method of any of examples 1-11.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the disclosure being set forth in the following claims.

## Claims

1. A computer-implemented method (700) performed by a system for providing a tipping over alert to a tipping vehicle (110), the method comprising:
- obtaining (702) from the tipping vehicle (110), a current tipping position and a current rate of change of the tipping position,
- obtaining (704), from the tipping vehicle's (110) air suspension pressure sensors (112a-112f), current pressure levels for each air suspension pressure sensor (112a-112f) and a current rate of change of pressure levels for each air suspension pressure sensor (112a-112f),
- predicting (706) from the current tipping position, the current rate of change of the tipping position, the current pressure levels and the current rate of change of pressure levels, a future centre of gravity of the tipping vehicle (110),
- determining (708) a risk of the tipping vehicle (110) tipping over based on the predicted future centre of gravity of the tipping vehicle (110).

2. The computer-implemented method (700) according to claim 1, wherein the method comprises:
- determining (705), from the current pressure levels, a current centre of gravity (202) of the tipping vehicle (110),
wherein predicting (706), includes predicting the future centre of gravity of the tipping vehicle from the current centre of gravity (202) of the tipping vehicle (110).

3. The computer-implemented method (700) according to claim 1 or 2, wherein the method comprises:
- comparing (707) the predicted future centre of gravity of the tipping vehicle (110) with a nominal centre of gravity of the tipping vehicle (110),
wherein determining (708) a risk of the tipping vehicle (110) tipping over is based on the comparison of the predicted future centre of gravity and the nominal centre of gravity of the tipping vehicle (110).

4. The computer-implemented method (700) according to claim 3, wherein the method comprises:
- providing (710) a tipping over alert to the tipping vehicle (110) if a deviation of the future centre of gravity from the nominal centre of gravity is determined to cause a risk of tipping over the tipping vehicle (110).

5. The computer-implemented method (700) according to claim 3 or 4, wherein the method comprises:
- providing (712) a stop tipping command to the tipping vehicle (110) if a deviation of the future centre of gravity from the nominal centre of gravity is determined to cause tipping over the tipping vehicle (110).

6. The computer-implemented method (700) according to any one of the preceding claims, wherein the method comprises:
- obtaining, from the tipping vehicle (110), a current tipping vehicle position and movement data,
- predicting, from the current tipping vehicle position and movement data, a future tipping vehicle position,
- comparing the future tipping vehicle position with a topographical map of where the tipping vehicle is located,
wherein predicting (708) a future centre of gravity of the tipping vehicle (110) includes predicting, from the future tipping vehicle position, the future centre of gravity of the tipping vehicle (110).

7. The computer-implemented method (700) according to any one of the preceding claims 2-6, wherein the method comprises:
- providing an alert to the tipping vehicle (110), if the current centre of gravity (202) does not change even though the current rate of change of the tipping position is indicating an increased tipping angle.

8. A system (100) for providing a tipping over alert to a tipping vehicle (110), the system (100) comprising a processing circuitry (810) and a memory (820), the processing circuitry (810) being configured to:
- obtain, from the tipping vehicle (110), a current tipping position and a current rate of change of the tipping position,
- obtain, from the tipping vehicle's (110) air suspension pressure sensors (112a-112f), current pressure levels for each air suspension pressure sensor (112a-112f) and a current rate of change of pressure levels for each air suspension pressure sensor (112a-112f),
- predict, from the current tipping position, the current rate of change of the tipping position, the current pressure levels and from the current rate of change of pressure levels, a future centre of gravity of the tipping vehicle (110),
- determine, a risk of the tipping vehicle (110) tipping over based on the predicted future centre of gravity of the tipping vehicle (110).

9. The system (100) according to claim 8, wherein the processing circuitry is configured to:
- determine, from the current pressure levels, a current centre of gravity (202) of the tipping vehicle (110),
wherein predicting the future centre of gravity of the tipping vehicle (110) includes predicting from the current centre of gravity (202) of the tipping vehicle (110).

10. The system (100) according to claim 8 or 9, wherein the processing circuitry is configured to:
- compare the predicted future centre of gravity of the tipping vehicle (110) with a nominal centre of gravity of the tipping vehicle (110),
wherein determining a risk of the tipping vehicle (110) tipping over is based on the comparison of the predicted future centre of gravity and the nominal centre of gravity of the tipping vehicle (110).

11. The system (100) according to claim 10, wherein the processing circuitry is configured to:
- provide a tipping over alert to the tipping vehicle (110) if a deviation of the future centre of gravity from the nominal centre of gravity is determined to cause a risk of tipping over the tipping vehicle (110).

12. The system (100) according to claim 10 or 11, wherein the processing circuitry (810) is configured to:
- provide a stop tipping command to the tipping vehicle (110) if a deviation of the future centre of gravity from the nominal centre of gravity is determined to cause tipping over the tipping vehicle (110).

13. The system (100) according to any one of the preceding claims 8-12, wherein the processing circuitry (810) is configured to:
- obtain, from the tipping vehicle (110) a current vehicle position and movement data,
- predict, from the current tipping vehicle position and movement data, a future tipping vehicle position,
- compare the future tipping vehicle position with a topographical map of where the tipping vehicle is located,
wherein the processing circuitry (810) is configured to predict a future centre of gravity of the tipping vehicle by including predicting, from the future tipping vehicle position, the future centre of gravity of the tipping vehicle (110).

14. A computer program product (830) comprising program code for performing, when executed by the processing circuitry (810), the method of any of claims 1-7.

15. A non-transitory computer-readable storage medium comprising instructions, which when executed by the processing circuitry, cause the processing circuitry (810) to perform the method of any of claims 1-7.

## Patentansprüche

1. Computerimplementiertes Verfahren (700), das von einem System zur Bereitstellung eines Kippalarms an ein Kippfahrzeug (110) durchgeführt wird, wobei das Verfahren umfasst:
- Erhalten (702) einer aktuellen Kippposition und einer aktuellen Änderungsrate der Kippposition vom Kippfahrzeug (110),
- Erhalten (704) aktueller Druckpegel für jeden Luftfederdrucksensor (112a-112f) und einer aktuellen Änderungsrate von Druckpegeln für jeden Luftfederdrucksensor (112a-112f) von den Luftfederdrucksensoren (112a-112f) des Kippfahrzeugs (110),
- Vorhersagen (706) eines zukünftigen Schwerpunkts des Kippfahrzeugs (110) anhand der aktuellen Kippposition, der aktuellen Änderungsrate der Kippposition, der aktuellen Druckpegel und der aktuellen Änderungsrate der Druckpegel,
- Bestimmen (708) eines Risikos des Umkippens des Kippfahrzeugs (110) basierend auf dem vorhergesagten zukünftigen Schwerpunkt des Kippfahrzeugs (110).

2. Computerimplementiertes Verfahren (700) nach Anspruch 1, wobei das Verfahren umfasst:
- Bestimmen (705) eines aktuellen Schwerpunkts (202) des Kippfahrzeugs (110) aus den aktuellen Druckpegeln,
wobei das Vorhersagen (706) das Vorhersagen des zukünftigen Schwerpunkts des Kippfahrzeugs anhand des aktuellen Schwerpunkts (202) des Kippfahrzeugs (110) umfasst.

3. Computerimplementiertes Verfahren (700) nach Anspruch 1 oder 2, wobei das Verfahren umfasst:
- Vergleichen (707) des vorhergesagten zukünftigen Schwerpunkts des Kippfahrzeugs (110) mit einem Nennschwerpunkt des Kippfahrzeugs (110),
wobei das Bestimmen (708) eines Risikos des Umkippens des Kippfahrzeugs (110) auf dem Vergleich des vorhergesagten zukünftigen Schwerpunkts mit dem Nennschwerpunkt des Kippfahrzeugs (110) basiert.

4. Computerimplementiertes Verfahren (700) nach Anspruch 3, wobei das Verfahren umfasst:
- Bereitstellen (710) eines Kippalarms an das Kippfahrzeug (110), wenn bestimmt wird, dass eine Abweichung des zukünftigen Schwerpunkts vom Nennschwerpunkt ein Risiko des Umkippens des Kippfahrzeugs (110) verursacht.

5. Computerimplementiertes Verfahren (700) nach Anspruch 3 oder 4, wobei das Verfahren umfasst:
- Bereitstellen (712) eines Kippstoppbefehls an das Kippfahrzeug (110), wenn bestimmt wird, dass eine Abweichung des zukünftigen Schwerpunkts vom Nennschwerpunkt ein Umkippen des Kippfahrzeugs (110) verursacht.

6. Computerimplementiertes Verfahren (700) nach einem der vorhergehenden Ansprüche, wobei das Verfahren umfasst:
- Erhalten einer aktuellen Kippfahrzeugposition und von Bewegungsdaten vom Kippfahrzeug (110),
- Vorhersagen einer zukünftigen Kippfahrzeugposition anhand der aktuellen Kippfahrzeugposition und der Bewegungsdaten,
- Vergleichen der zukünftigen Kippfahrzeugposition mit einer topografischen Karte des Ortes, an dem sich das Kippfahrzeug befindet,
wobei das Vorhersagen (708) eines zukünftigen Schwerpunkts des Kippfahrzeugs (110) das Vorhersagen des zukünftigen Schwerpunkts des Kippfahrzeugs (110) anhand der zukünftigen Kippfahrzeugposition umfasst.

7. Computerimplementiertes Verfahren (700) nach einem der vorhergehenden Ansprüche 2 bis 6, wobei das Verfahren umfasst:
- Bereitstellen eines Alarms an das Kippfahrzeug (110), wenn der aktuelle Schwerpunkt (202) sich nicht ändert, obwohl die aktuelle Änderungsrate der Kippposition einen zunehmenden Kippwinkel anzeigt.

8. System (100) zur Bereitstellung eines Kippalarms an ein Kippfahrzeug (110), wobei das System (100) eine Verarbeitungsschaltung (810) und einen Speicher (820) umfasst, wobei die Verarbeitungsschaltung (810) dazu konfiguriert ist:
- vom Kippfahrzeug (110) eine aktuelle Kippposition und eine aktuelle Änderungsrate der Kippposition zu erhalten,
- von den Luftfederdrucksensoren (112a-112f) des Kippfahrzeugs (110) aktuelle Druckpegel für jeden Luftfederdrucksensor (112a-112f) und eine aktuelle Änderungsrate der Druckpegel für jeden Luftfederdrucksensor (112a-112f) zu erhalten,
- anhand der aktuellen Kippposition, der aktuellen Änderungsrate der Kippposition, der aktuellen Druckpegel und der aktuellen Änderungsrate der Druckpegel einen zukünftigen Schwerpunkt des Kippfahrzeugs (110) vorherzusagen,
- basierend auf dem vorhergesagten zukünftigen Schwerpunkt des Kippfahrzeugs (110) ein Risiko des Umkippens des Kippfahrzeugs (110) zu bestimmen.

9. System (100) nach Anspruch 8, wobei die Verarbeitungsschaltung dazu konfiguriert ist:
- anhand der aktuellen Druckpegel einen aktuellen Schwerpunkt (202) des Kippfahrzeugs (110) zu bestimmen,
wobei das Vorhersagen des zukünftigen Schwerpunkts des Kippfahrzeugs (110) das Vorhersagen anhand des aktuellen Schwerpunkts (202) des Kippfahrzeugs (110) umfasst.

10. System (100) nach Anspruch 8 oder 9, wobei die Verarbeitungsschaltung dazu konfiguriert ist:
- den vorhergesagten zukünftigen Schwerpunkt des Kippfahrzeugs (110) mit einem Nennschwerpunkt des Kippfahrzeugs (110) zu vergleichen,
wobei das Bestimmen eines Risikos des Umkippens des Kippfahrzeugs (110) auf dem Vergleich des vorhergesagten zukünftigen Schwerpunkts mit dem Nennschwerpunkt des Kippfahrzeugs (110) basiert.

11. System (100) nach Anspruch 10, wobei die Verarbeitungsschaltung dazu konfiguriert ist:
- einen Kippalarm an das Kippfahrzeug (110) bereitzustellen, wenn bestimmt wird, dass eine Abweichung des zukünftigen Schwerpunkts vom Nennschwerpunkt ein Risiko des Umkippens des Kippfahrzeugs (110) verursacht.

12. System (100) nach Anspruch 10 oder 11, wobei die Verarbeitungsschaltung (810) dazu konfiguriert ist:
- einen Kippstoppbefehl an das Kippfahrzeug (110) bereitzustellen, wenn bestimmt wird, dass eine Abweichung des zukünftigen Schwerpunkts vom Nennschwerpunkt ein Umkippen des Kippfahrzeugs (110) verursacht.

13. System (100) nach einem der vorhergehenden Ansprüche 8 bis 12, wobei die Verarbeitungsschaltung (810) dazu konfiguriert ist:
- vom Kippfahrzeug (110) eine aktuelle Fahrzeugposition und Bewegungsdaten zu erhalten,
- anhand der aktuellen Kippfahrzeugposition und der Bewegungsdaten eine zukünftige Kippfahrzeugposition vorherzusagen,
- die zukünftige Kippfahrzeugposition mit einer topografischen Karte des Ortes, an dem sich das Kippfahrzeug befindet, zu vergleichen,
wobei die Verarbeitungsschaltung (810) dazu konfiguriert ist, einen zukünftigen Schwerpunkt des Kippfahrzeugs vorherzusagen, unter Einbeziehung des Vorhersagens des zukünftigen Schwerpunkts des Kippfahrzeugs (110) anhand der zukünftigen Kippfahrzeugposition.

14. Computerprogrammprodukt (830), das Programmcode zur Durchführung des Verfahrens nach einem der Ansprüche 1 bis 7 umfasst, wenn er durch die Verarbeitungsschaltung (810) ausgeführt wird.

15. Nichtflüchtiges computerlesbares Speichermedium, das Anweisungen umfasst, die, wenn sie durch die Verarbeitungsschaltung ausgeführt werden, die Verarbeitungsschaltung (810) dazu veranlassen, das Verfahren nach einem der Ansprüche 1 bis 7 durchzuführen.

## Revendications

1. Procédé mis en œuvre par ordinateur (700) réalisé par un système pour la fourniture d'une alerte de basculement à un véhicule basculant (110), le procédé comprenant :
- l'obtention (702), à partir du véhicule basculant (110), d'une position de basculement actuelle et d'un taux de variation actuel de la position de basculement,
- l'obtention (704), à partir des capteurs de pression de suspension pneumatique (112a-112f) du véhicule basculant (110), des niveaux de pression actuels pour chaque capteur de pression de suspension pneumatique (112a-112f) et d'un taux de variation actuel des niveaux de pression pour chaque capteur de pression de suspension pneumatique (112a-112f),
- la prédiction (706), à partir de la position de basculement actuelle, du taux de variation actuel de la position de basculement, des niveaux de pression actuels et du taux de variation actuel des niveaux de pression, d'un centre de gravité futur du véhicule basculant (110),
- la détermination (708) d'un risque de renversement du véhicule basculant (110) sur la base du centre de gravité futur prédit du véhicule basculant (110).

2. Procédé mis en œuvre par ordinateur (700) selon la revendication 1, dans lequel le procédé comprend :
- la détermination (705), à partir des niveaux de pression actuels, d'un centre de gravité actuel (202) du véhicule basculant (110),
dans lequel la prédiction (706) inclut la prédiction du centre de gravité futur du véhicule basculant à partir du centre de gravité actuel (202) du véhicule basculant (110).

3. Procédé mis en œuvre par ordinateur (700) selon la revendication 1 ou la revendication 2, dans lequel le procédé comprend :
- la comparaison (707) du centre de gravité futur prédit du véhicule basculant (110) avec un centre de gravité nominal du véhicule basculant (110),
dans lequel la détermination (708) d'un risque de renversement du véhicule basculant (110) est basée sur la comparaison du centre de gravité futur prédit et du centre de gravité nominal du véhicule basculant (110).

4. Procédé mis en œuvre par ordinateur (700) selon la revendication 3, dans lequel le procédé comprend :
- la fourniture (710) d'une alerte de basculement au véhicule basculant (110) s'il est déterminé qu'un écart du centre de gravité futur par rapport au centre de gravité nominal cause un risque de renversement du véhicule basculant (110).

5. Procédé mis en œuvre par ordinateur (700) selon la revendication 3 ou la revendication 4, dans lequel le procédé comprend :
- la fourniture (712) d'une commande d'arrêt de basculement au véhicule basculant (110) s'il est déterminé qu'un écart du centre de gravité futur par rapport au centre de gravité nominal cause un renversement du véhicule basculant (110).

6. Procédé mis en œuvre par ordinateur (700) selon l'une quelconque des revendications précédentes, dans lequel le procédé comprend :
- l'obtention, à partir du véhicule basculant (110), d'une position de véhicule basculant actuelle et de données de mouvement,
- la prédiction, à partir de la position de véhicule basculant actuelle et des données de mouvement, d'une position de véhicule basculant future,
- la comparaison de la position de véhicule basculant future avec une carte topographique de l'endroit où le véhicule basculant est situé,
dans lequel la prédiction (708) d'un centre de gravité futur du véhicule basculant (110) inclut la prédiction, à partir de la position de véhicule basculant future, du centre de gravité futur du véhicule basculant (110).

7. Procédé mis en œuvre par ordinateur (700) selon l'une quelconque des revendications 2 à 6, dans lequel le procédé comprend :
- la fourniture d'une alerte au véhicule basculant (110), si le centre de gravité actuel (202) ne change pas alors même que le taux de variation actuel de la position de basculement indique un angle de basculement accru.

8. Système (100) pour la fourniture d'une alerte de basculement à un véhicule basculant (110), le système (100) comprenant une circuiterie de traitement (810) et une mémoire (820), la circuiterie de traitement (810) étant configurée pour :
- obtenir, à partir du véhicule basculant (110), une position de basculement actuelle et un taux de variation actuel de la position de basculement,
- obtenir, à partir des capteurs de pression de suspension pneumatique (112a-112f) du véhicule basculant (110), des niveaux de pression actuels pour chaque capteur de pression de suspension pneumatique (112a-112f) et un taux de variation actuel de niveaux de pression pour chaque capteur de pression de suspension pneumatique (112a-112f),
- prédire, à partir de la position de basculement actuelle, du taux de variation actuel de la position de basculement, des niveaux de pression actuels et à partir du taux de variation actuel de niveaux de pression, un centre de gravité futur du véhicule basculant (110),
- déterminer un risque de renversement du véhicule basculant (110) sur la base du centre de gravité futur prédit du véhicule basculant (110).

9. Système (100) selon la revendication 8, dans lequel la circuiterie de traitement est configurée pour :
- déterminer, à partir des niveaux de pression actuels, un centre de gravité actuel (202) du véhicule basculant (110), dans lequel la prédiction du centre de gravité futur du véhicule basculant (110) inclut la prédiction à partir du centre de gravité actuel (202) du véhicule basculant (110).

10. Système (100) selon la revendication 8 ou la revendication 9, dans lequel la circuiterie de traitement est configurée pour :
- comparer le centre de gravité futur prédit du véhicule basculant (110) avec un centre de gravité nominal du véhicule basculant (110),
dans lequel la détermination d'un risque de renversement du véhicule basculant (110) est basée sur la comparaison du centre de gravité futur prédit et du centre de gravité nominal du véhicule basculant (110).

11. Système (100) selon la revendication 10, dans lequel la circuiterie de traitement est configurée pour :
- fournir une alerte de basculement au véhicule basculant (110) s'il est déterminé qu'un écart du centre de gravité futur par rapport au centre de gravité nominal cause un risque de renversement du véhicule basculant (110).

12. Système (100) selon la revendication 10 ou la revendication 11, dans lequel la circuiterie de traitement (810) est configurée pour :
- fournir une commande d'arrêt de basculement au véhicule basculant (110) s'il est déterminé qu'un écart du centre de gravité futur par rapport au centre de gravité nominal cause un renversement du véhicule basculant (110).

13. Système (100) selon l'une quelconque des revendications 8 à 12, dans lequel la circuiterie de traitement (810) est configurée pour :
- obtenir, à partir du véhicule basculant (110), une position de véhicule actuelle et des données de mouvement,
- prédire, à partir de la position de véhicule basculant actuelle et des données de mouvement, une position de véhicule basculant future,
- comparer la position de véhicule basculant future avec une carte topographique de l'endroit où le véhicule basculant est situé,
dans lequel la circuiterie de traitement (810) est configurée pour prédire un centre de gravité futur du véhicule basculant en incluant la prédiction, à partir de la position future de véhicule basculant, du centre de gravité futur du véhicule basculant (110).

14. Produit de programme informatique (830) comprenant un code de programme pour la réalisation, lorsqu'il est exécuté par la circuiterie de traitement (810), du procédé selon l'une quelconque des revendications 1 à 7.

15. Support de stockage lisible par ordinateur non transitoire comprenant des instructions qui, lorsqu'elles sont exécutées par la circuiterie de traitement, amènent la circuiterie de traitement (810) à réaliser le procédé selon l'une quelconque des revendications 1 à 7.
